# EUROPÄISCHE PATENTANMELDUNG

(11) **EP 3 461 758 A1**
(43) Veröffentlichungstag der Anmeldung: **03.04.2019**
(21) Anmeldenummer: 18196345.5
(22) Anmeldetag: 24.09.2018
(51) Int. Cl.: B65D 19/44, B65D 1/34, B65G 65/00, B65D 81/05

(54) **VORRICHTUNG ZUM TRANSPORT VON STÜCKGUT UND BEHÄLTERN**

(30) Priorität: 29.09.2017 CH 11942017
(71) Anmelder: WRH Walter Reist Holding AG, 8272 Ermatingen (CH)
(72) Erfinder: Mäder, Carl Conrad, 8335 Hittnau (CH)
(74) Vertreter: IPrime Rentsch Kaelin AG

(57) **Zusammenfassung**

Ein Träger (1) zum Transport von Transportgut umfasst eine Trägerstruktur zum Tragen des Transportgutes (2, 3) auf einer Trägerebene (14), mit einer Oberseite (11), welche die Trägerebene definiert, und einer Unterseite (12); und eine auf der Oberseite der Trägerstruktur angeordneten Haltestruktur (4) zum Einschränken oder Behindern einer horizontalen Bewegung eines auf der Trägerstruktur gelagerten Transportgutes in Bezug auf die Trägerebene. Die Haltestruktur weist Mittel (41, 42, 43, 44, 45a, 45b, 46) auf, welche mit auf der Trägerstruktur stehenden Lagerelementen (22, 31) des genannten Transportguts wechselwirken, und so eine reversible Fixierung des Transportguts entlang mindestens eines Vektors parallel zur Trägerebene bewirken, zu deren Überwindung eine parallel zur Trägerebene wirkende Kraft aufgewendet werden muss, die einen gewissen Schwellenwert überschreitet.

## Beschreibung

### Technologisches Gebiet

Die vorliegende Erfindung betrifft Träger zum Transport von Transportgut, insbesondere Stückgut und rollbaren und nicht-rollbaren Behältern, mit einer Trägerstruktur zum Tragen des Transportgutes auf einer Trägerebene, sowie Verfahren zur Beladung eines Transportträgers.

### Technologischer Hintergrund

In Intralogistiksystemen sollen häufig Transportgüter, wie beispielsweise Stückgut oder Behälter, entlang einer Transportstrecke gefördert, in entsprechende Lagersysteme eingelagert oder ausgelagert, von Schnittstellen zu anderen Transportsystemen wie beispielsweise Lastkraftwagen übernommen oder an diese übergeben werden, etc. Solche Intralogistiksysteme können verschiedenen Zwecken dienen, beispielsweise der Lagerbewirtschaftung, der Kommissionierung von Aufträgen oder dem Transport von Zwischenprodukten und ähnlichem in Produktionsketten. Aus Effizienzgründen ist es dabei wünschenswert, solche Transportvorgänge und Handhabungsvorgänge möglichst automatisch und mit möglichst wenig Schritten auszuführen.

Ein Problem bei solchen Transportvorgängen und Handhabungsvorgängen kann die Uneinheitlichkeit der zu verarbeitenden Transportgüter darstellen. Bekannt aus dem Stand der Technik sind deshalb verschiedene Transportträger, auf denen oder in denen die Transportgüter gelagert sind, so dass die Träger mit Transportgut einfach transportiert oder gehandhabt werden können. So werden Warenlieferungen beispielsweise auf standardisierten Paletten, beispielsweise auf Europool-Paletten, bereitgestellt und transportiert. Solche standardisierten Paletten können mit entsprechenden automatisierten Vorrichtungen automatisiert transportiert oder in Lagersysteme eingelagert/ausgelagert werden.

Aus Kostengründen, wegen der Internationalisierung des Handels und auch aus regulatorischen Gründen werden Standard-Paletten und ähnliche Systeme heute immer seltener verwendet. Stattdessen werden Transportträger eingesetzt, die für einen lediglich einmaligen Gebrauch vorgesehen sind, und entsprechend kostengünstig und wenig stabil gefertigt sind. Beispielsweise können solche Träger lediglich klotzartige Standfüsse aufweisen anstatt der in Längsrichtung durchgehenden Standfüsse von Europool-Paletten. Der Transportträger kann gar aus wenig stabilen aber preiswerten Kartonelementen gefertigt sein. Die geringe mechanische Stabilität und die Formenvielfalt erschwert den Transport und die automatische Handhabung.

EP 2639188 A1 zeigt ein automatisiertes Lagersystem für Kollis und Stückgüter, bei welchem diese von Paletten entnommen und einzeln auf einem Lagergutträger in Form eines Tablars mit einem umlaufenden Rand platziert und zusammen mit diesem dem Lagersystem zugeführt werden. Da das zu lagernde Gut eine im Wesentlichen identische Grundfläche wie das Tablar aufweist, wird es auf dem Tablar in horizontaler Richtung durch den umlaufenden Rand formschlüssig gehalten.

WO 2015/090369 A1 zeigt einen Lagergutträger für ein Lagerliftsystem, mit einem Rahmen und einem an dem Rahmen befestigten Boden, wobei der Rahmen in Bezug auf den Boden einen umlaufenden Rand bildet. Das Transportgut wird durch den Rand in horizontaler Richtung formschlüssig gehalten.

Eine sichere horizontale Fixierung des Transportgutes auf Transportträgern setzt voraus, dass die Form des Transportgutes und des Transportträgers aufeinander abgestimmt sind, denn ansonsten können sich die Transportgüter trotz Formschluss innerhalb des zu Verfügung stehenden Volumens noch horizontal verschieben. Dies kann bei grösseren oder schwereren Transportgütern oder bei schnellen Förderprozessen zu Beschädigungen am Transportgut oder Träger führen, und/oder zu Störungen in Proessabläufen und Anlagen.

DE 202014108207 A1 zeigt einen Transportbehälter zum automatisierten Transport von Briefen und Paketen in einem Verteilersystem. In einem flachen rechteckigen Rahmen ist ein flacher Boden schräg angeordnet. Bei horizontaler Ausrichtung des Rahmens rutsch ein Paket oder Brief schwerkraftbedingt auf dem schrägen Boden nach unten, bis es am überstehenden Rahmen ansteht und so formschlüssig im Transportbehälter gehalten wird. Zum Entleeren des Transportbehälters wird der Rahmen verkippt, so dass das Transportgut auf dem Boden aus dem Träger rutscht.

DE 202014104805 U1 zeigt einen weiteren Transportbehälter zum automatisierten Transport von Transportgütern. In einem niedrigen rechteckigen Rahmen ist ein flacher Boden eingelegt, so dass der Rahmen einen umlaufenden Rand bildet. Der Boden kann innerhalb des Rahmens angehoben werden, so dass der flache Boden bündig zum Rahmen steht und nunmehr kein Rand verbleibt. Dies ermöglicht ein ebenerdiges Beladen oder Entladen des Transportbehälters, ohne dass das Transportgut in den Behälter fällt oder aus diesem entnommen werden muss. Ein ähnliches System ist auch aus DE 102008026326 A1 bekannt.

Um rollbare Transportgüter, beispielsweise Flugzeugtrolleys, Rollwagen etc. auf Transportträgern in automatisierten Systemen fördern zu können, ist wegen ihrer immanent leichten Bewegbarkeit eine formschlüssige Fixierung notwendig, beispielsweise durch Bremsklötze, oder die Rollen bzw. Räder werden blockiert.

DE 102015217958 A1 beschreibt ein automatisches Parkhaus, bei welchem ein Auto vom Benutzer an einer Übergabestation auf einer Lagerplattform abgestellt wird. Anschliessend wird die Lagerplattform inklusive Auto mittels Transportliften, Verschiebevorrichtungen und einer Mehrzahl von Förderbändern an einen bestimmten Lagerort gefördert. Das Auto muss für den sicheren Transport zumindest mit der Handbremse gegen ein Wegrollen gesichert sein.

Es besteht ein allgemeines Bedürfnis nach Verbesserungen in diesem Gebiet.

### Darstellung der Erfindung

Aufgabe der Erfindung ist es, einen Transportträger der eingangs erwähnten Art zur Verfügung zu stellen, der mindestens einige der oben erwähnten und andere Nachteile nicht aufweist.

Insbesondere soll ein solcher Transportträger den effizienten Transport verschiedener Transportgüter in einem Transportsystem, insbesondere einem Fördersystem und/oder einem Lagersystem erlauben.

Weiter soll ein solcher Transportträger langlebig und stabil, kostengünstig herstellbar und effizient wartbar sein.

Eine andere Aufgabe der Erfindung ist die Bereitstellung eines effizienten Verfahrens zur Beladung eines erfindungsgemässen Transportträgers.

Diese und andere Aufgaben werden gelöst durch einen erfindungsgemässen Transportträger beziehungsweise durch ein erfindungsgemässes Verfahren gemäss den unabhängigen Ansprüchen. Weitere vorteilhafte Ausführungsformen sind in den abhängigen Ansprüchen gegeben.

Die erfindungsgemässe Lösung kann durch verschiedene, jeweils für sich vorteilhafte und, sofern nicht anders ausgeführt, beliebig miteinander kombinierbare Ausgestaltungen weiter verbessert werden. Auf diese Ausführungsformen und die mit ihnen verbundenen Vorteile wird im Folgenden eingegangen.

Im Rahmen dieser Beschreibung soll der Begriff Transportgut allgemein Objekte umfassen, die einzeln transportiert oder gehandhabt werden können, insbesondere Stückgüter mit oder ohne Verpackung, aber auch andere rollbare und nicht-rollbare Transportträger und Behälter, wie beispielsweise Paletten und Tragstrukturen, Gepäckstücke wie beispielsweise Koffer und Tragtaschen, Körbe, Kisten, Pakete, rollbare Trolleys, Rollwagen, rollbare Untersätze, mit oder ohne Beladung.

Ein erster Aspekt der Erfindung betrifft einen vorteilhaften Transportträger zum Transport von Transportgut, umfassend eine Trägerstruktur zum Tragen des Transportgutes auf einer horizontalen Trägerebene, mit einer Oberseite, welche die Trägerebene definiert, und einer Unterseite; und einer auf der Oberseite der Trägerstruktur angeordneten Haltestruktur zum Einschränken oder Behindern einer horizontalen Bewegung eines auf der Trägerstruktur gelagerten Transportgutes in Bezug auf die Trägerebene.

Die Haltestruktur weist Mittel auf, welche mit auf der Trägerstruktur stehenden Lagerelementen des genannten Transportguts wechselwirken, und so eine reversible Fixierung des Transportguts entlang mindestens eines Vektors parallel zur Trägerebene bewirken, zu deren Überwindung eine parallel zur Trägerebene wirkende Kraft aufgewendet werden muss, die einen gewissen Schwellenwert überschreitet.

Eine Richtung parallel zur Trägerebene wird in dieser Beschreibung auch als horizontal bezeichnet.

Gegenüber einem herkömmlichen Fördersystem wie beispielsweise einem Bandförderer oder Rollenförderer erlaubt ein erfindungsgemässer Transportträger eine flexiblere Förderung und anderweitige Handhabung des Transportguts. So können erfindungsgemässe Transportträger, und damit auch das darauf gelagerte Transportgut, individuell, also einzeln und unabhängig von anderen Transportträgern, gefördert werden.

Bei der Förderung können die Transportträger in allen Raumrichtungen bewegt werden, also insbesondere nicht nur horizontal, sondern auch vertikal. Erfindungsgemässe Transportträger können neben der Bewegung entlang der Raumachsen auch gedreht werden. Beispielsweise können die Transportträger um die Senkrechte gedreht werden, oder sie können um eine horizontale Achse gekippt oder geschwenkt werden.

Mit den erfindungsgemässen Transportträgern lassen sich so Logistiksysteme realisieren, bei denen die Transportgüter auf den Transportträgern nicht nur gefördert werden können, sondern auch sortiert, gelagert, zwischengespeichert, kommissioniert, oder automatisch entladen bzw. beladen werden können.

Vorteilhaft weist bei einem erfindungsgemässen Transportträger die Haltestruktur Mittel auf, welche die Haftreibung gegenüber einer glatten Fläche erhöhen.

Die Oberseite der Trägerstruktur eines erfindungsgemässen Transportträgers ist vorteilhaft mindestens so gross oder grösser als die Projektion eines auf der Trägerstruktur gelagerten Transportgutes senkrecht auf die Trägerebene.

Vorteilhaft fixiert die Haltestruktur ein auf der Trägerstruktur gelagertes Transportgut parallel zur Trägerebene nicht formschlüssig.

Bei einer vorteilhaften Ausführungsvariante eines erfindungsgemässen Transportträgers ist die Haltestruktur eine Beschichtung mit einem Polymer mit hoher Haftreibung, eine Matte aus elastischem Polymer, eine Bürstenmatte, eine Matte mit Hohlräumen, ein Teppich, oder Kombinationen davon.

Die Haltestruktur kann als Beschichtung einer Oberfläche ausgestaltet sein, welche die Haftreibung beziehungsweise Rollreibung eines darauf gelagerten rollenbaren oder nicht rollbaren Transportgutes erhöht.

Beispielsweise kann die Oberseite des Transportträgers als mit einer Beschichtung aus Silikonkautschuk oder Acrylkautschuk ausgerüstetes Metallblech ausgestaltet sein. Wird das Transportgut, beispielsweise ein Stückgut mit darunter angeordneten Stehfüssen oder ein rollbarer Trolley, auf den Transportträger abgestellt, so ist die resultierende Haftreibung beziehungsweise Rollreibung ausreichend, um bis zu einem gewissen Schwellenwert einer horizontal wirkenden Kraft ein Gleiten beziehungsweise ein Rollen des Transportgutes zu verhindern. Der entsprechende Schwellenwert für die horizontale Kraft ist dabei abhängig vom Haftreibungskoeffizienten beziehungsweise Rollwiderstandskoeffizienten, der von der konkreten Paarung zwischen den Materialeigenschaften der Oberseite des Transportträgers und den Standfüssen beziehungsweise den Rädern oder Rollen des Transportgutes abhängt, sowie der senkrecht auf die Trägerebene wirkenden Gewichtskraft des Transportgutes.

Die im Normalbetrieb eines Fördersystems beziehungsweise Lagersystems zu erwartenden, auf das Transportgut wirkenden horizontalen Kräfte hängen zum einen von der Fördergeschwindigkeit und der Geometrie des Fördererwegs ab beziehungsweise von der positiven oder negativen Beschleunigung während des Transports, und zum anderen vom Gewicht des Transportgutes. Die Beschichtung der Oberseite des Transportträgers muss somit so gewählt werden, dass für alle zu fördernden Transportgüter der Haftungskoeffizient beziehungsweise Rollwiderstandskoeffizient so ist, dass eine horizontal wirkende Zentrifugalkraft beziehungsweise Beschleunigungskraft die gegenwirkende maximale Haftreibungskraft beziehungsweise Rollwiderstandskraft nicht überschreiten kann.

Im vorgesehenen Betrieb eines Fördersystems mit einem solchen erfindungsgemässen Transportträger wird sich deshalb das Transportgut während des Transports nicht in horizontaler Richtung verschieben. Es erübrigt sich eine zusätzliche Sicherung des Transportgutes auf den Transportträger. Insbesondere muss das Transportgut nicht formschlüssig fixiert werden, beziehungsweise müssen Bremsvorrichtungen von rollbaren Transportgütern nicht betätigt werden. Dies erlaubt eine effiziente Beladung beziehungsweise Entladung des erfindungsgemässen Transportträgers, da die dazu notwendigen Handgriffe und Vorgänge reduziert werden.

Beispielsweise können Trolleys, wie sie beispielsweise in Flugzeugen zur Verteilung von Essen oder Waren verwendet werden, in einem entsprechenden Logistikzentrum im Produktionsprozess auf erfindungsgemässen Transportträgern gefördert werden, ohne dass bei der manuellen Entnahme eines Trolleys vom Transportträger ein zusätzlicher manueller Vorgang notwendig ist.

In einer anderen vorteilhaften Ausführungsform eines erfindungsgemässen Transportträgers weist die Haltestruktur eine Matte mit geschlossenen fluidgefüllten Hohlräumen auf.

Die Matte kann beispielsweise aus flexiblem Polymermaterial bestehen, geschäumt oder ungeschäumt.

Die darin angeordneten Hohlräume können in sich geschlossen sein, oder können teilweise oder vollständig miteinander fluidisch verbunden sein.

Besonders vorteilhaft sind die Hohlräume der Matte mit einer hochviskosen Flüssigkeit gefüllt, beispielsweise einem Gel und/oder einem nicht-newtonschen Fluid.

Die Verwendung eines hochviskosen Fluids (Viskosität 10² - 10⁵ mPa·s, vorteilhaft 10³ - 10⁵ mPa·s, besonders vorteilhaft 10⁴ - 10⁵ mPa·s) hat den Vorteil, dass sich das Fluid innerhalb eines Hohlraums beziehungsweise zwischen den Hohlräumen langsamer verschiebt und umlagert als bei niedriger Viskosität, so dass eine Verformung der Matte unter Krafteinwirkung verlangsamt wird. Wird beispielsweise ein rollbarer Behälter auf einer solchen Matte gelagert, so passt sich die Matte unter Einfluss des Eigengewichts des rollbaren Behälters an die Räder des Behälters an. Der rollbaren Behälter sinkt auf der Matte in einem bestimmten Masse ein. Wirkt nun kurzzeitig eine horizontale Kraft auf den rollbaren Behälter, beispielsweise die Zentrifugalkraft bei einem Richtungswechsel auf einem horizontalen Fördersystem, so werden die Räder des rollbaren Behälters bis zu einem bestimmten maximalen Wert der wirkenden horizontalen Kraft in den Vertiefungen der Matte fixiert. Erst wenn eine solche horizontale Kraft länger auf den Behälter einwirkt, hat die hochviskose Flüssigkeit ausreichend Zeit, aufgrund der Krafteinwirkung in andere Hohlräume zu fliessen und so eine horizontale Verschiebung des Behälters zu erlauben, beispielsweise beim Beladen oder Entladen des Transportträgers.

Ein Beispiel für ein geeignetes hochviskoses Fluid sind Silikonöle mit ausreichender Kettenlänge, um die oben genannten Viskositätswerte zu erreichen. Silikonöle haben insbesondere den Vorteil, dass sie chemisch inert, ungiftig, unverderblich und unbrennbar sind.

Das Fluid kann auch ein nicht-newtonsches Fluid sein, insbesondere ein dilatantes, also scherverdickendes Fluid. Solche Fluide haben unter Einwirkung von Scherkräften eine höhere Viskosität als bei fehlender Krafteinwirkung. Beim Einwirken einer horizontalen Kraft auf den Behälter verdickt sich das Fluid, und setzt einer Verformung einen höheren Widerstand entgegen.

Ein bekanntes Beispiel für ein Fluid mit solchen Eigenschaften ist eine konzentrierte Suspension von Stärke in Wasser, oder geeignet vernetzte Gele, beispielsweise borvernetzte Polygalactomannan-Gele.

In einer weiteren vorteilhaften Ausführungsform eines erfindungsgemässen Transportträgers weist die Haltestruktur einen im Wesentlichen geschlossenen Behälter auf, der eine hochviskose Flüssigkeit enthält, der auf einer der Trägerstruktur abgewandten Seite mit einer flexiblen Wand abgeschlossen ist.

Besonders vorteilhaft ist die hochviskose Flüssigkeit wiederum ein Gel und/oder ein nicht-newtonsches Fluid. Die oben genannten Ausführungen zu der Ausführungsform mit einer Matte mit Hohlräumen mit hochviskosem Fluid gelten analog auch für diese Ausführungsform.

Die flexible Wand kann vorteilhaft als Polymermembran ausgestaltet sein.

Bei den vorgenannten Ausführungsformen eines erfindungsgemässen Transportträgers sind vorteilhaft auf der von dem Behälterinneren abgewandten Oberfläche der flexiblen Wand beziehungsweise der von der Oberfläche angewandten Seite der Matte flexible und/oder starre Verstärkungselemente angebracht sind, welche die flexible Wand beziehungsweise die Matte vor mechanischen Einwirkungen schützen.

Besonders vorteilhaft sind die Verstärkungselemente als Kachelelemente oder Leistenelemente oder Gitterelemente ausgestaltet. Solche Verstärkungselemente führen zu einer längeren Lebensdauer des Transportträgers.

In einer anderen vorteilhaften Ausführungsform eines erfindungsgemässen Transportträgers umfasst die Haltestruktur Vertiefungen in einer Lagerfläche.

Vorteilhaft umfasst bei einem solchen Transportträger die Haltestruktur eine Gitterstruktur. Eine solche Gitterstruktur kann beispielsweise als ein Gitterrost ausgestaltet sein, oder als eine Vielzahl von parallelen Stegen mit dazwischen liegenden Vertiefungen.

Alternativ oder zusätzlich kann bei einem solchen Transportträger die Haltestruktur eine Vielzahl von Vertiefungen in einer ebenen Lagerfläche umfassen, wobei die Vertiefungen so ausgestaltet sind, dass ein Segment eines Rades eines fahrbaren Behälters darin angeordnet werden kann.

Dies bedeutet, dass das entsprechende Segment des Rades in der entsprechenden Vertiefung in horizontaler Richtung formschlüssig gehalten ist. Zur horizontalen Verschiebung des rollbaren Transportgutes muss ein entsprechendes Rad des Transportgutes aus der Vertiefung gelangen. Ohne Anspruch auf die Richtigkeit der folgenden Erklärung kann dies vereinfacht so verstanden werden, dass dazu das Rad auf einer gegenüber der Horizontalen um einen Winkel α geneigten Ebene nach oben rollen muss. Dazu muss die zur Falllinie parallele Teilkraft sin(α)·F_{G} der senkrecht wirkenden Gewichtskraft F_{G} überwunden werden. Zur Verschiebung des Transportgutes in horizontaler Richtung muss also eine entsprechende Gegenkraft überwunden werden.

Bei einem erfindungsgemässen Transportträger, wie er obenstehend diskutiert worden ist, kann die Trägerstruktur einen umlaufenden Rand aufweisen, welcher über die Oberseite der Trägerstruktur vorsteht. Dies erlaubt eine formschlüssige Fixierung der Haltestruktur in horizontaler Richtung.

Bei einem erfindungsgemässen Transportträger kann die Oberseite der Trägerstruktur auch als konkave Vertiefung ausgestaltet sein, in der das Transportgut angeordnet werden kann.

Eine solche Ausführungsform ist insbesondere vorteilhaft für automatisierte Logistikprozesse mit Transportgütern, die sehr unterschiedliche Formen, Strukturen und Dimensionen aufweisen können. Ein Beispiel sind Gepäcklogistikabläufe in Flughäfen, wo Transportgüter/Gepäckstücke verschiedener Art, beispielsweise Hartschalenkoffer, normale Koffer, weiche Tragtaschen, etc. beim Check-In entgegengenommen, einer Sicherheitsüberprüfung unterzogen und auf die die richtigen Flugzeuge verteilt werden müssen, bzw. aus den Flugzeugen entladen und zu den vorgesehenen Gepäckausgabestellen bzw. Transferflügen gebracht werden müssen. Die bisherigen Logistiksysteme umfassen diverse Schnittstellen zwischen verschiedenen Fördersystemen, beispielsweise Bandförderern und Transportwagen, die manuelle Arbeit nötig machen. Zudem steigt so das Risiko von Fehlern. Insbesondere für grosse Flughäfen sind solche Logistiksysteme wenig effizient.

Die vorgenannte vorteilhafte Ausführungsform eines Transportträgers mit einer konkaven Vertiefung erlaubt eine formschlüssige Fixierung des Transportguts in horizontaler Richtung. Gleichzeitig kann das Transportgut mit einer rollenden Bewegung bzw. rutschenden Bewegung auf den Träger gebracht bzw. vom Träger entnommen werden, ohne dass das Transportgut beschädigt wird oder hängenbleiben kann.

Alternativ oder zusätzlich kann zum Beladen oder Entladen eines solchen Transportträgers der Transportträger gegenüber der horizontalen Ebene geschwenkt werden. Auf diese Weise kann das Transportgut aus der konkaven Vertiefung schwerkraftgetrieben herausrutschen oder herausrollen, oder kann einfach herausgezogen oder gerollt werden.

Ein solcher Transportträger kann nicht nur in der Horizontalen gefördert werden, sondern auch aufwärts bzw. abwärts auf Rampen mit einer gewissen Steigung. Die konkave Vertiefung kann dabei eine temporäre Verschiebung des Transportgutes aufgrund der Neigung des Transportträgers laufend ausgleichen. Die maximal mögliche Steigung ergibt sich dabei aus dem Erfordernis, dass das Transportgut in dieser Lage nicht schwerkraftgetrieben über den Rand des Transportträgers gleiten oder rollen können darf.

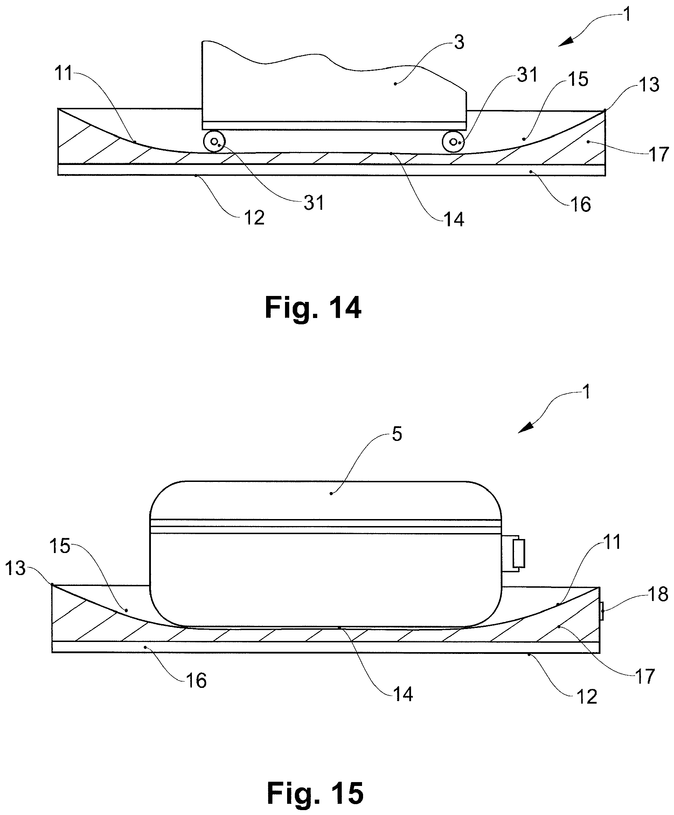

In der Praxis werden für die Förderwege Neigungswinkel verwendet werden, die geringer sind als der maximal mögliche Wert. Beispielsweise beträgt der maximal mögliche Neigungsgrad des nachfolgend anhand von Figur 14 diskutierten konkreten Ausführungsbeispiels eines Transportträgers mit darauf unblockiert rollend gelagertem Transporttrolley ca. 10°. In der Praxis können so beispielsweise Förderwege mit einem Neigungswinkel von 5° problemlos realisiert werden, was aufwendige bauliche Massnahmen zur Sicherstellung einer konstant horizontalen Förderung minimiert. Für einen Transportträger mit vollständig ebener Oberseite hingegen wäre eine solche Förderneigung schwierig realisierbar, ohne dass sich das rollbare Transportgut unkontrolliert verschiebt.

Eine konkave Vertiefung kann als doppelkonkave Vertiefung, also konkav entlang beiden horizontalen Achsen, ausgestaltet sein, oder als Ausbuchtung oder schalenartige Vertiefung oder schaufelartige Vertiefung oder Innenwölbung.

Die Form der konkaven Vertiefung ist vorteilhaft so gewählt, dass zumindest in einer Richtung die Trägerebene stetig, also ohne Kanten, in eine schräge Wand übergeht. So können keine Teile des Transportgutes, beispielsweise Kanten von Palettenfüssen, verkanten oder anhängen.

Vorteilhaft geht die konkave Vertiefung bündig in einen umlaufenden Rand der Transportstruktur über.

Bei einer anderen vorteilhaften Variante eines erfindungsgemässen Transportträgers ist die Unterseite der Trägerstruktur als ebene Fläche ausgebildet. Dies ist vorteilhaft für die störungslose Förderung des erfindungsgemässen Transportträgers auf einem automatisierten Fördersystem, beispielsweise einem Gurtbandförderer, einem Gliederbandförderer oder einem Rollenförderer.

Eine ebene Unterseite eines erfindungsgemässen Transportträgers ermöglicht eine Drehung des Transportträgers in der waagrechten Ebene. So können auch Fördersysteme verwendet werden, bei welchen die Transportträger nicht in einer festgelegten horizontalen Ausrichtung gefördert werden müssen und sich während dem Transport auch um die Senkrechte drehen können, beispielsweise langsam laufende Gliederbandförderer.

Besonders vorteilhaft ist die Unterseite als ebene Platte ausgebildet, beispielsweise aus Metall, Kunststoff und/oder Holz.

Die Unterseite kann vorteilhaft auch als Gitterstruktur ausgebildet sein, die über die ganze Unterseite eine ebene Auflagefläche definiert.

Unter einer Gitterstruktur wird im Zusammenhang dieser Beschreibung auch eine Wabenstruktur verstanden.

Eine Gitterstruktur erlaubt eine leichtere Bauweise der tragenden Struktur des Transportträgers, beziehungsweise eine höhere Traglast.

Die Gitterstruktur kann auf der Unterseite des Transportträgers durch eine Platte oder eine Wand abgeschlossen sein, oder kann auch teilweise oder ganz gegen aussen geöffnet sein, so dass die Kanten der Gitterstruktur als Auflagefläche dienen.

Die Gitterstruktur kann beispielsweise aus Polymer-Werkstoff oder Metall gefertigt sein.

Die Reibung der Unterseite eines Transportträgers wird vorteilhaft auf das vorgesehene Fördersystem angepasst.

Ein erfindungsgemässer Transportträger kann zusätzlich noch weitere Elemente umfassen, welche der Handhabung des Transportträgers in einem automatisierten Fördersystem oder Lagersystem dienen.

Bei einem erfindungsgemässen Transportträger kann ein Identifikationsmittel vorgesehen sein, welches eine Identifikation des Transportträgers erlaubt.

Ein solches Identifikationsmittel kann beispielsweise ein RFID-Element, ein Strichcode-Element, ein QR-Code-Element und/oder ein anderes Mittel umfassen, welches durch eine externe Lesevorrichtung wie zum Beispiel eine RFID-Leseeinheit, ein Strichcode-Scanner oder eine Kamera, ausgelesen werden kann. 1.Verfahren zur Beladung eines Transportträgers, umfassend die Schritte:
Ein zweiter Aspekt der Erfindung betrifft ein vorteilhaftes Verfahren zum Beladen eines erfindungsgemässen Transportträgers. Bei einem solchen Verfahren wird ein erfindungsgemässer Transportträger in einer Beladeposition bereitgestellt, in welcher der Transportträger gegenüber einer waagrechten Transportposition um einen gewissen Winkel gekippt ist. Ebenso wird ein Transportgut bereitgestellt. Das bereitgestellte Transportgut wird auf den bereitgestellten Transportträger in der Beladeposition aufgebracht, beispielsweise durch Schieben oder Rollen. Der Transportträger wird dann in die waagrechte Transportposition geschwenkt.

Vorteilhaft weist der Transportträger eine konkave Oberfläche aus, und/oder ist die Oberseite der Trägerstruktur des Transportträgers als konkave Vertiefung ausgestaltet, in der das Transportgut angeordnet werden kann.

Das Transportgut ist vorteilhaft rollbar.

Vorteilhaft ist in der Beladeposition des Transportträgers die umlaufende äussere Kante des Transportträgers bündig zu einer Ebene angeordnet, auf welcher das Transportgut bereitgestellt ist.

### Beschreibung der Figuren

Zum besseren Verständnis der vorliegenden Erfindung wird nachfolgend auf die Zeichnungen Bezug genommen. Diese zeigen lediglich Ausführungsbeispiele des Erfindungsgegenstands.
- Figur 1: zeigt eine Ausführungsform eines erfindungsgemässen Transportträgers.
- Figur 2: zeigt eine andere Ausführungsform eines erfindungsgemässen Transportträgers.
- Figur 3: zeigt die Ausführungsform eines erfindungsgemässen Transportträgers aus Figur 2, mit einem darauf gelagerten nicht rollbaren Transportgut.
- Figur 4: zeigt die Ausführungsform eines erfindungsgemässen Transportträgers aus Figur 2, mit einem darauf gelagerten rollbaren Transportgut.
- Figuren 5 bis 10: zeigen weitere Ausführungsformen eines erfindungsgemässen Transportträgers.
- Figur 11: zeigt den erfindungsgemässen Transportträger mit darauf gelagerten rollbaren Transportgut gemäss Figur 4, der auf einem Rollenförderer gefördert wird.
- Figur 12: zeigt den erfindungsgemässen Transportträger mit darauf gelagerten rollbaren Transportgut gemäss Figur 5, der auf einem Gurtbandförderer gefördert wird.
- Figur 13: zeigt in einer Querschnittsansicht eine andere Ausführungsform eines erfindungsgemässen Transportträgers mit einer konkaven Vertiefung, mit einem darauf gelagerten nicht rollbaren Transportgut, (a) in einer Transportposition, und (b) in einer Ladeposition.
- Figur 14: zeigt in einer Querschnittsansicht eine weitere Ausführungsform eines erfindungsgemässen Transportträgers mit einer konkaven Vertiefung, mit einem darauf gelagerten rollbaren Transportgut.
- Figur 15: zeigt in einer Querschnittsansicht den erfindungsgemässen Transportträger aus Figur 14, mit einem darauf gelagerten Reisekoffer.
- Figur 16: zeigt schematisch in einer Querschnittansicht ein erfindungsgemässes Verfahren, (a) vor dem Beladen eines Transportträgers mit einem Transportgut; (b) während dem Beladevorgang; (c) nach erfolgtem Beladevorgang; und (d) während dem Entladevorgang.
- Figur 17: zeigt schematisch ein horizontales Fördersystem mit erfindungsgemässen Transportträgern, welches Steigungsabschnitte aufweist.

### Ausführung der Erfindung

Die im Folgenden gegebenen Beispiele dienen der besseren Veranschaulichung der Erfindung, sind jedoch nicht dazu geeignet, die Erfindung auf die hierin offenbarten Merkmale zu beschränken. Gleiche oder gleich wirkende Teile sind mit gleichen oder ähnlichen Bezugszeichen versehen.

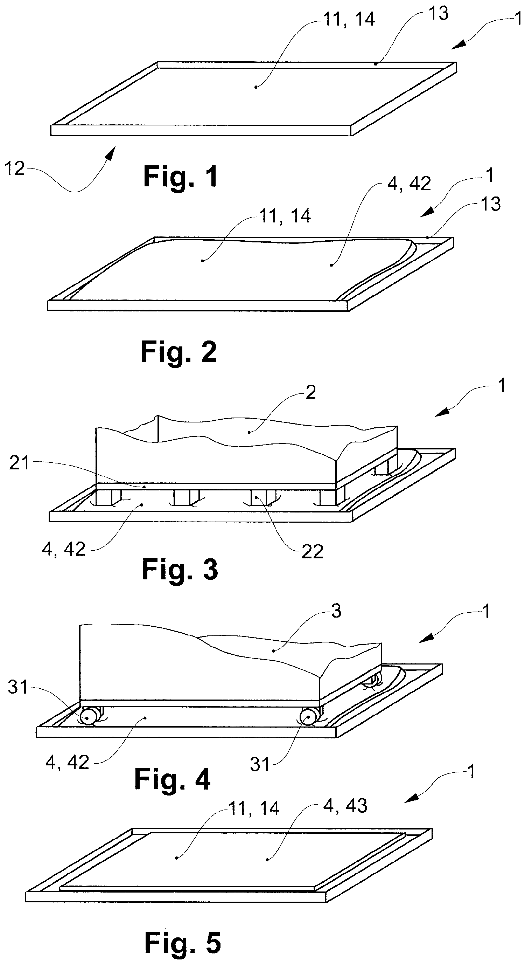

Eine mögliche Ausführungsform eines erfindungsgemässen Transportträgers 1 ist in Figur 1 dargestellt. Der Transportträger 1 umfasst einen flachen Boden mit einer Oberseite 11 und einer nicht sichtbaren Unterseite 12. Die Oberseite 11 definiert eine Trägerebene 14, auf der im vorgesehenen Gebrauch des Transportträgers 1 ein Transportgut gelagert wird. Die Trägerebene 14 wird von einer Kante 13 umrandet.

Der Aufbau des Bodens der schematisch dargestellten Trägervorrichtung 1 ist nicht im Detail dargestellt. Ein solcher Boden kann beispielsweise als Metallplatte oder Metallblech ausgestaltet sein.

Die Oberseite 11 der Trägervorrichtung 1 ist im gezeigten Beispiel mit einer weiter oben beschriebenen Beschichtung versehen, welche die Haftreibung beziehungsweise Rollreibung eines darauf gelagerten rollenbaren oder nicht rollbaren Transportgutes erhöht. Diese beschichtete Oberseite 11 bildet in diesem Fall die Haltestruktur 4 gemäss dem unabhängigen Anspruch. Beispielsweise kann die Oberseite 11 als mit einer Beschichtung aus Silikonkautschuk oder Acrylkautschuk ausgerüstetes Metallblech ausgestaltet sein.

Eine andere Ausführungsform eines erfindungsgemässen Transportträgers ist Figur 2 schematisch gezeigt. Im gezeigten Ausführungsbeispiel ist auf der Oberseite 11 des Transportträgers 1 eine Gelmatte 42 als Haltestruktur 4 angeordnet. Im gezeigten Beispiel wird die Gelmatte 42 durch die umlaufende Kante 13 formschlüssig gehalten.

Die Gelmatte 42 besteht aus einem in einem mattenförmigen Beutel eingeschlossenen hochviskosen Gel, beispielsweise einem borvernetzten Polygalactomannan. Wird ein Transportgut auf der Gelmatte 42 deponiert, so sinkt das Transportgut aufgrund der Verformung der Gelmatte ein. Es resultiert eine horizontal wirkende Haltekraft.

Figur 3 zeigt den erfindungsgemässen Transportträger 1 aus der Figur 2, beladen mit einem nicht-rollbaren Transportgut in Form einer Palette mit acht klotzförmigen Standfüssen 22. Durch den Anpressdruck der Kontaktfläche zwischen Standfüssen 22 und Gelmatte 42 wird das Gel in diesem Bereich seitlich verdrängt, sodass sich um die Standfüsse 22 ein Wulst bildet. Dieser Wulst des hochviskosen Gels setzt bei einer auf das Transportgut wirkenden horizontalen Kraft den Standfüssen 22 einen gewissen Widerstand entgegen, zu dessen Überwindung eine gewisse Kraft überschritten werden muss.

Figur 4 zeigt wiederum den Transportträger aus der Figur 2, beladen mit einem rollbaren Transportgut, in Form eines mit vier Rollenelementen 31 ausgestatteten Transportbehälters 3. Auch hier sinken die Rollen 31 des Transportbehälters 3 aufgrund der Gewichtskraft auf der Gelmatte 42 ein, und der Transportbehälter 3 wird gegen ein rollendes Verschieben auf der Trägerebene des Transportträgers gesichert.

Figur 5 zeigt eine andere Ausführungsform eines erfindungsgemässen Transportträger 1, bei welchem die Haltestruktur 4 als Schaumgummimatte 43 ausgestaltet ist. Analog wie bei der Ausführungsform in den Figuren 2 bis 4 sinkt das Transportgut an den Kontaktflächen zur Schaumgummimatte 43 ein, was zu einer hohen Haftreibung beziehungsweise einem hone Rollwiderstand führt. Das Transportgut wird so gegen eine horizontale Verschiebung gegenüber dem Transportträger gesichert.

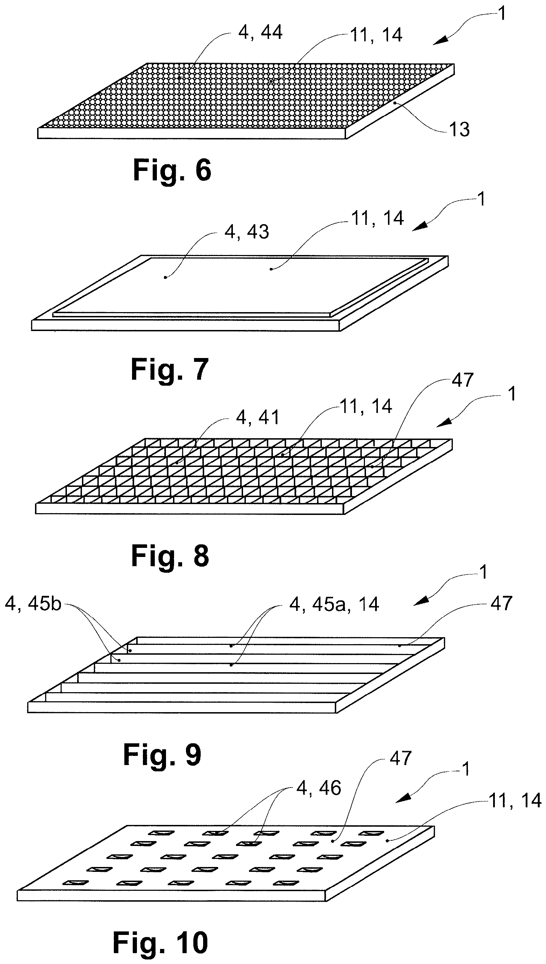

Im in der Figur 6 gezeigten Ausführungsbeispiel ist die Haltestruktur 4 des Transportträgers 1 als Bürstenmatte 44 realisiert. Die Länge, die Dichte und die Stabilität der Bürstenfasern ist dabei so gewählt, dass die Standfüsse beziehungsweise die Rollen eines Transportgutes die Bürstenfassung lokal deformieren, so dass wiederum das Transportgut in einem bestimmten Mass in die Bürstenmatte einsinkt.

In den bisher dargestellten Ausführungsbeispielen in den Figuren 2 bis 6 wurde die Haltestruktur 4 jeweils durch die umlaufende Kante 13 formschlüssig auf den Transportträger 1 fixiert. Figur 7 zeigten Ausführungsbeispiel eines Transportträgers 1 ohne umlaufende Kante, mit einer Haltestruktur 4 in Form einer Schaumstoffmatte 44. In diesem Fall muss die Haltestruktur 4 auf eine andere Art befestigt werden, beispielsweise durch kleben, verschrauben oder formschlüssiges Fixieren in einer entsprechenden Vertiefung der Oberfläche des Transportträgers 1.

Ein Transportträger ohne umlaufende Kante hat den Vorteil, dass eine Beladung beziehungsweise Entladung mit fahrbaren Hilfsmitteln oder durch Rollen des rollbaren Transportgutes vereinfacht wird.

Figur 8 zeigt noch eine weitere mögliche Ausführungsform eines erfindungsgemässen Transportträgers 1, bei welchem der Transportträger als Gitterstruktur 41 realisiert ist. Neben der mechanischen Stabilität einer solchen Gitterstruktur 41 führen die Vertiefungen der Gitterstruktur dazu, dass Räder beziehungsweise Rollen von rollbaren Transportträgern in diesen Vertiefungen stehen bleiben. Dabei befindet sich nur ein gewisses unteres Segment der Räder in den Vertiefungen, so dass das rollbare Transportgut problemlos wieder vom Transportträger entnommen werden kann. Jedoch muss dazu eine gewisse horizontale Kraft aufgewendet werden. Entsprechend ist das Transportgut bis zu diesem Schwellenwert gegen eine horizontale Verschiebung auf den Transportträger gesichert.

Noch eine andere Ausführungsform eines erfindungsgemässen Transportträgers 1 ist in Figur 9 gezeigt. Die Haltestruktur 4 umfasst eine Mehrzahl von parallel angeordneten Stegen 45a, und dazwischenliegenden Vertiefungen 45b. Eine solche Haltestruktur 4 kann beispielsweise mit entsprechend geformten Rollen eines rollbaren Transportgutes wechselwirken, wie sie beispielsweise bei Einkaufswagen verwendet werden, die auf geneigten Fussgänger-Rollbändern transportiert werden sollen.

Auf einer ebenen Fläche haben diese Rollen, die zwei voneinander beanstandete harte Reifen umfassen, einen geringen Rollwiderstand. Der Abstand der Reifen einer Rolle ist jedoch so gewählt, dass bei einer Positionierung der Rolle auf der Haltestruktur 4 die Reifen in den Vertiefungen 45b verbleiben.

Die Stege 45a bewirken nun eine Bremswirkung, die auf verschiedene Weise erzielt werden kann. Beispielsweise kann zwischen den beiden Reifen der Rolle ein Zylinder aus elastisch verformbarem Material angeordnet sein, der auf einem oder mehreren der zwischen den Reifen liegenden Stegen 45a aufliegt, was einen erheblich erhöhten Rollwiderstand bewirkt.

In einer anderen möglichen Variante wechselwirken die genannten Stege 45a und betätigen einem Mechanismus, welcher die Rolle reversibel bremst oder blockiert. So kann beispielsweise durch die Stege ein Bremsklotz auf eine Rollenachse gepresst werden.

Bis zu einem gewissen Schwellenwert ist somit das rollbare Transportgut in Längsrichtung der Stege 45a gegen eine rollende Verschiebung gesichert. Senkrecht dazu ist der entsprechende Schwellenwert der horizontalen Kraft noch höher.

Ein weiteres Ausführungsbeispiel eines erfindungsgemässen Transportträgers 1 in Figur 10 schematisch dargestellt. Auf der ebenen Lagerfläche 47 des Transportträgers ist eine Vielzahl von Vertiefungen 46 angeordnet, welche die Haltestruktur 4 bilden.

Die Vertiefungen 46 sind im gezeigten Beispiel in einem regelmässigen Muster angeordnet, so dass die Haltestruktur 4 für verschiedene Typen von rollbaren Transportgütern einsetzbar ist. Beispielsweise können die Abstände der Vertiefungen so gewählt sein, dass verschiedene Typen von Flugzeug-Trolleys mit unterschiedlichen Radabständen in Längsrichtung und Querrichtung auf der Haltestruktur 4 deponiert werden können.

Die Räder beziehungsweise Rollen der Trolleys sinken dabei in einem geringen Masse in die Vertiefungen 46. Soll der Trolley wieder von dem Transportträger entfernt werden, muss in horizontaler Richtung eine gewisse Kraft aufgewendet werden, um den Trolley aus den Vertiefungen zu heben.

Im gezeigten Ausführungsbeispiel sind die Vertiefungen als längliche Schlitze in Form eines Kreissegments ausgestaltet. Ebenso möglich sind jedoch andere Formgebungen, beispielsweise kuhlenförmige Vertiefungen oder rechteckige kastenförmige Vertiefungen.

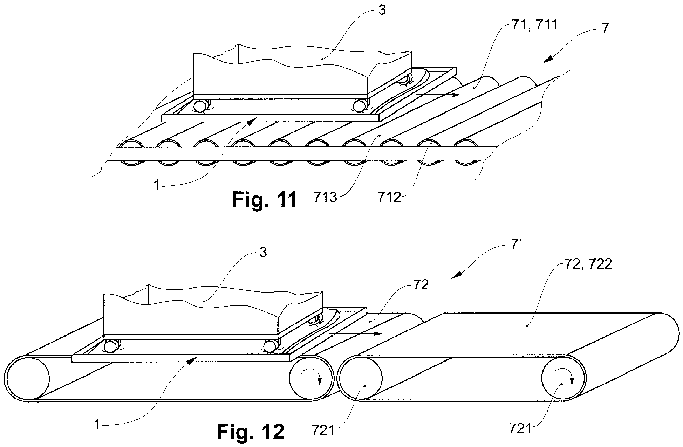

Figur 11 zeigt beispielhaft die Verwendung eines erfindungsgemässen Transportträgers 1 auf einem horizontalen Fördersystem 7 in Form eines Rollenförderers 71. Dieser umfasst im Wesentlichen einen Rollengang 711 bestehend aus einer Mehrzahl von Rollen 712, die gegebenenfalls mit einem äusseren Rollenmantel 713 versehen sind. In einem automatisierten Fördersystem ist ein Teil oder alle der Rollen 712 angetrieben.

Das Fördergut wird auf den sich im Wesentlichen gleichsinnig und gleichschnell drehenden Rollen in einer Förderrichtung befördert, in der Figur durch den Pfeil dargestellt. Herkömmliche Paletten mit in Längsrichtung durchgehenden Standfüssen könnten auf solchen Fördersystemen direkt gefördert werden. Verfügt das Transportgut jedoch über einzelne Standfüsse oder Rollen beziehungsweise Räder, so führt eine Förderung auf einem Rollenförderer 71 mit hoher Wahrscheinlichkeit zu einer Beschädigung der Standfüsse beziehungsweise Rollen und oder einer Beschädigung des Fördersystems.

Im gezeigten Beispiel wird dieses Problem gelöst, indem ein solches nicht direkt förderbares Transportgut in Form eines Trolleys mit vier Rollen auf einem erfindungsgemässen Transportträger 1 wie in Figur 4 dargestellt gelagert wird. Der Transportträger 1 rollt problemlos über die Rollen des Fördersystems. Der Abstand der Rollen kann dabei noch grösser sein als im dargestellten Beispiel, solange der Transportträger 1 mit seiner Unterseite immer mindestens auf zwei bis drei Rollen 712 aufliegt. Eine geringere Anzahl Rollen verringert die Kosten eines Rollenförderers, und ist entsprechend vorteilhaft.

Wird der Transportträger auf dem Rollenförderer beschleunigt oder abgebremst beziehungsweise um eine Kurve geführt, so wirken auf den Transportträger beziehungsweise das darauf gelagerte Transportgut horizontale Kräfte. Bei geeigneter Ausgestaltung des Transportträgers überschreiten diese jedoch nicht den Schwellenwert, sodass das Transportgut auf dem Transportträger in horizontaler Richtung gesichert ist.

Ein anderes Anwendungsbeispiel ist in Figur 12 gezeigt. Ein erfindungsgemässer Transportträger 1 mit darauf gelagerten rollbaren Transportgut 3 gemäss Figur 4 wird auf einem Fördersystem 7' in Form eines Gurtbandförderers 72 mit Gurtband 722 und Rollen 721 gefördert. Der Transportträger 1 überschreitet problemlos Lücken zwischen hintereinander folgenden Gurtbandförderern 72. Bei einem Transportgut mit Standfüssen oder Rollen hingegen würden diese sich in der Lücke verfangen.

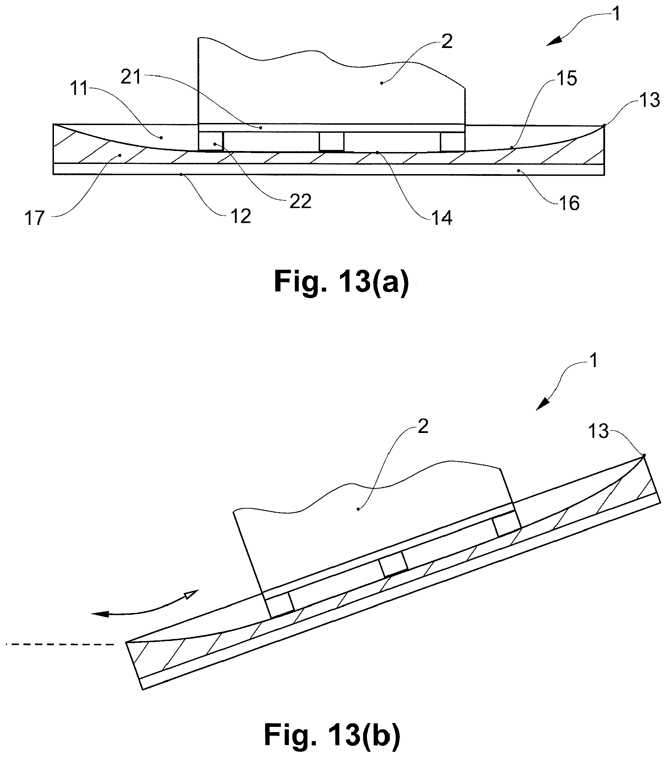

Ein weiteres Ausführungsbeispiel eines erfindungsgemässen Transportträgers 1 ist in Figur 13 dargestellt. Auf einer stabilen Tragstruktur 16 mit einer planen Unterseite 12, die beispielsweise als Metallplatte oder Gitterost ausgestaltet sein kann, ist eine Haltestruktur 17 angeordnet. Die Haltestruktur 17 weist eine nach oben offene konkave Vertiefung 15 auf. Die Haltestruktur 17 fixiert das zu transportierende Transportgut, im gezeigten Fall eine nicht rollende Transportpalette 2 mit Tragstruktur 21 und Füssen 22, in seitlicher Richtung. In der dargestellten waagrechten Transportposition des Trägers [vgl. Figur 13(a)] kann so das Transportgut 2 auf der Trägerebene 14 während des Transports nicht vom Träger rutschen.

Die konkave Form der Haltestruktur ist vorteilhaft möglichst glatt ausgestaltet, so dass das Transportgut nirgends verkanten kann, wenn der Träger aus der Horizontalen [Transportposition Figur 13(a)] in eine gekippte Ladeposition gebracht wird, wie in Figur 13(b) gezeigt. Die Haltestruktur, oder zumindest die Oberseite 11 der Haltestruktur 15, kann beispielsweise aus PTFE oder HDPE bestehen, oder einem anderen Polymer mit geringem Reibungskoeffizienten.

In der Entladeposition rutscht die Transportpalette auf der Oberfläche 11 schwerkraftgetrieben an den Rand der konkaven Öffnung, oder kann mit geringem Kraftauswand in diese Position geschoben werden. Alternativ kann auch eine Ladevorrichtung wie beispielsweise ein Palettenhubwagen (nicht gezeigt), seitlich unter die Palette eingreifen, und die Palette vom Träger 1 abheben, bzw. auf dem Träger deponieren.

Ein anderes Ausführungsbeispiel eines erfindungsgemässen Transportträgers 1 in Transportposition ist in Figur 14 dargestellt. Ein rollbarer Transportbehälter, beispielsweise ein Flugzeugtrolley 3, ist in der konkaven Vertiefung 15 abgestellt. Die Rollen 31 können mit den üblichen Mitteln, beispielsweise Feststellbremsen, blockiert sein. Alternativ kann auf ein Blockieren der Räder 31 verzichtet werden.

Insbesondere bei den für die erfindungsgemässen Transportträger 1 vorgesehenen relativ geringen Transportgeschwindigkeiten ist eine solche zusätzliche Fixierung des Transportbehälters 3 nicht notwendig. Dies weist den Vorteil aufweist, dass bei der Beladung bzw. Entladung des Transportträgers 1 ein manueller Schritt wegfällt. Dies erlaubt effizientere Arbeitsabläufe und auch eine mögliche Automatisierung des Ladevorgangs.

Beispielsweise kann ein rollbarer Transportbehälter auf einer schrägen Ebene bereitgehalten werden, die bündig an die Kante 13 des Transportträgers 1 in der horizontalen Transportposition oder einer gekippten Beladeposition anschliesst, und vorteilhaft die gleiche Neigung wie die Oberfläche 11 im Randbereich der Vertiefung 15 aufweist. Der Transportbehälter kann dann ohne grossen Kraftaufwand rollend auf den Transportträger geschoben werden, oder rollt selbsttätig schwerkraftgetrieben auf den Transportträger. Anschliessend ist der Transportbehälter in der Transportposition des Transportträgers sicher gehalten.

Für das Entladen kann der Transportträger in eine Entladeposition gekippt werden, in welcher der rollbare Transportbehälter ohne grossen Kraftaufwand rollend vom Transportträger geholt werden kann, oder selbsttätig schwerkraftgetrieben auf eine bündig anschliessende Ebene wegrollen kann.

Die Formgebung der Haltestruktur wird vorteilhaft an die vorgesehene Art des Transportguts und die Art der Beladung und Entladung angepasst. So ist beispielsweise bei dem Transportträger 1 in der Figur 14 die Vertiefung 15 tiefer ausgestaltet, und damit auch die Neigung der Oberfläche 11 im Randbereich an der Kante 13 steiler in Bezug auf die waagrechte Trägerebene 14, als beim Ausführungsbeispiel des Transportträgers in Figur 13.

Eine vollautomatische Beladung und Entladung eines erfindungsgemässen Transportträgers 1 ist besonders vorteilhaft bei zu transportierenden Objekten, deren Schwerpunkt so tief ist, dass ein Überkippen während der Beladung und Entladung unter normalen Umständen nicht möglich ist.

In Figur 15 ist der erfindungsgemässe Transportträger 1 aus Figur 14 mit einem liegenden Reisekoffer beladen. Dieser kann beispielsweise über eine Rutsche schwerkraftgetrieben automatisch in die Vertiefung 15 des Transportträgers 1 gebracht werden. Ebenso kann der Reisekoffer 12 durch Verkippen des Transportträgers rutschend aus der konkaven Vertiefung des Transportträgers entfernt und einer weiteren Verarbeitung zugeführt werden.

Am Transportträger 1 ist ein Identifikationsmittel 18 angeordnet. Das Identifikationsmittel 18 kann beispielsweise ein RFID-Element, ein Strichcode-Element, ein QR-Code-Element und/oder ein anderes Mittel umfassen, welches durch eine externe Lesevorrichtung ausgelesen werden kann. Auf diese Weise ist der Transportträger 1 durch entsprechende Detektor-Vorrichtungen, beispielsweise eine RFID-Leseeinheit, einen Strichcode-Scanner oder eine Kamera, eindeutig identifizierbar.

Ein Transportgut, beispielsweise ein Gepäckstück, kann bei der Beladung identifiziert werden, beispielsweise durch Auslesen einer dem Gepäckstück beim Einchecken zugewiesenen Strichcode-Etikette, und kann dann in einer Datenbank einer Steuervorrichtung dem entsprechenden Transportträger zugeordnet werden.

Der Aufenthaltsort der Transportträger innerhalb eines Logistiksystems kann durch die Identifikationsmittel 18 einfach überwacht werden, so dass der Aufenthaltsort der Transportgüter ebenfalls immer bekannt ist.

Ein solches Ausführungsbeispiel ist insbesondere vorteilhaft für den Transport, die Zwischenlagerung und die Kommissionierung von Gepäckstücken in automatisieren Intralogistiksystemen von grossen Flughäfen. So können beispielsweise Gepäckstücke statt auf Bandförderern auf erfindungsgemässen Transportträgern entgegengenommen, gefördert, sortiert, zwischengelagert, zusammengestellt, gelagert, kommissioniert, kontrolliert, durchleuchtet, abgegeben oder auf andere Weise weiterverarbeitet werden. Da die Gepäckstücke dabei durchgehend auf den erfindungsgemässen Transportträgern verbleiben, ist nur ein Minimum an manuellen Schritten notwendig. Insbesondere können Umladevorgänge und Wechsel zwischen verschiedenen Fördermitteln vermieden oder reduziert werden. Die Transportgüter werden mechanisch weniger beansprucht, was das Beschädigungsrisiko senkt.

Eine derartige hochautomatisierte Verarbeitung von Gepäckstücke auf erfindungsgemässen Transportträgern erhöht die Sicherheit, da so der mögliche Zugriff von potentiell unbefugten Personen auf das Transportgut minimiert wird-. Entsprechend sinkt das Risiko von Diebstählen, Manipulationen, etc.

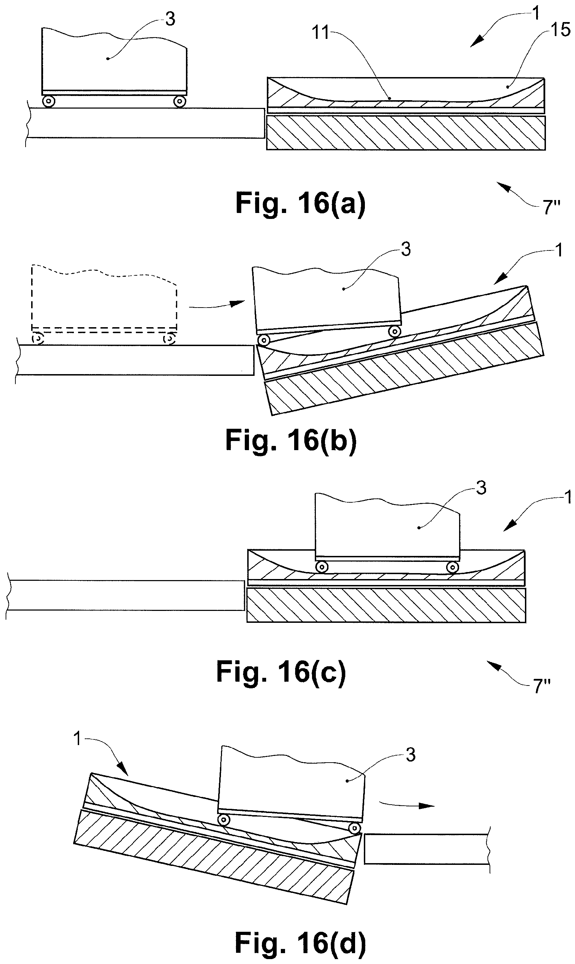

Figur 16 zeigt einzelne Zwischenschritte eines erfindungsgemässen Verfahrens. In Figur 16(a) wird ein zu verladender rollbarer Transportbehälter 3 auf einer ebenen Fläche bereitgestellt. Daneben befindet sich ein erfindungsgemässer Transportträger 1 mit konkaver Vertiefung 15, noch in horizontaler Transportposition, auf einem horizontalen Fördermittel 7".

Der Transportträger 1 wird nun mit einer geeigneten Aktuatorvorrichtung nach links in eine Beladungsposition verschwenkt, so dass sich seine Kante im Wesentlichen bündig zum Rand der Ebene befindet, auf welcher der Transportbehälter 1 bereitgestellt ist [Figur 16(b)]. Die Aktuatorvorrichtung kann beispielsweise wie im gezeigten Beispiel als schwenkbares Segment des Fördermittels ausgestaltet sein. Der Transportbehälter kann nun nach rechts auf den Transportträger gerollt werden. Dies kann manuell durch eine Bedienperson erfolgen, oder automatisch.

Anstatt den Transportträger erst am Ort der Beladung in die Beladeposition zu verschwenken, kann die Schwenkbewegung auch während der Förderung auf dem Fördermittel erfolgen, indem die Ausrichtung des Fördermittels, beispielsweise eines Bandförderers, entlang des Förderwegs kontinuierlich von einer waagrechten Lage in eine quer zum Förderweg geneigte Lage übergeht.

Die Dimensionierung und Formgebung des Transportträgers und der Schwenkwinkel der Beladeposition sind vorzugsweise auf die Dimensionierung des Transportgutes angepasst, so dass wie in Figur 16(b) gezeigt der Transporttrolley 3 stabil auf dem Transportträger steht.

Anschliessend wird der Transportträger 1 nach rechts zurück in die horizontale Transportposition geschwenkt [Figur 16(c)]. Dies geschieht mit einer Geschwindigkeit, die es dem Transportbehälter 3 erlaubt, laufend schwerkraftgetrieben in die Position der geringsten potentiellen Energie zu rollen, so dass der Transportbehälter stehts stabil und im Wesentlichen aufrecht steht.

Schlussendlich steht der Transportbehälter 3 auf der ebenen mittleren Fläche des Transportträgers 1 in der horizontalen Transportposition, wie in Figur 16(c) gezeigt. Der Transportträger kann nun wie erforderlich weitergefördert oder anderweitig in einem Logistiksystem behandelt werden.

Das Entladen der Transportträger kann auf ähnliche Art und Weise erfolgen wie die Beladung [Figur 16(d)]. Der Transportträger 1 wird verschwenkt, im gezeigten Ausführungsbeispiel nach rechts. Dies erfolgt vorteilhaft mit einer Geschwindigkeit, die es dem rollbaren Transportbehälter 3 erlaubt, stehts rollend in einem stabilen Zustand und im Wesentlichen aufrecht zu bleiben.

Schlussendlich erreicht der Transportträger 1 die in Figur 16(d) gezeigte Entladeposition, in der die rechte Kante des Transportträgers im Wesentlichen bündig zu einer ebenen Fläche rechts davon steht. Von dort kann der Transportträger dann manuell oder automatisch rollend entnommen werden.

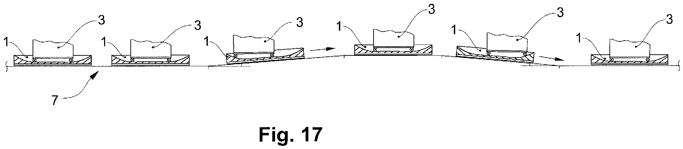

Ein horizontales Fördersystem 7 mit einer Mehrzahl von erfindungsgemässen Transportträgern 1 mit Transportgütern 3 ist in Figur 17 dargestellt. Die schematisch dargestellten Transportträger 1 weisen eine konkave Vertiefung auf, beispielsweise analog zu Figur 14. Die Transportgüter 3 sind rollbare Behälter wie beispielsweise Flugzeugtrolleys.

Das Fördersystem 7, beispielsweise ein langsam laufender Bandförderer, bewegt die auf dem Bandförderer gelagerten Transportträger von links nach rechts, wobei nach einem ersten horizontalen Abschnitt eine ansteigende Rampe anschliesst, mit einer beispielhaften Steigung von 10% (ca. 5.7°), ein weiterer horizontaler Förderabschnitt, eine abfallende Rampe mit 10% Gefälle, und ein weiterer horizontaler Abschnitt.

Während die Neigung der Transportträger 1 entlang des Förderwegs der jeweiligen Neigung des Fördersystems 7 entspricht, gleichen die frei rollend beweglichen Transporttrolleys 3 die jeweilige Neigung aus. Der Transportbehälter rollt selbsttätig schwerkraftgetrieben auf der konkaven Oberseite des Transportträgers in eine Lage, in der die potentielle Energie lokal minimal ist und der Transportbehälter im Wesentlichen im Lot bleibt.

Mit einem solchen System lassen sich Steigungen in ausgedehnten Logistikanlagen ohne vertikale Fördermittel überwinden. Beispielsweise können so Höhendifferenzen zwischen verschiedenen Gebäuden überwunden werden, oder auch zwischen verschiedenen Etagen des gleichen Gebäudes, ohne das aufwendige Hebemittel vorgesehen werden müssen.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

## Patentansprüche

1. Träger (1) zum Transport von Transportgut, mit
einer Trägerstruktur zum Tragen des Transportgutes (2, 3, 5) auf einer horizontalen Trägerebene (14), mit einer Oberseite (11), welche die Trägerebene definiert, und einer Unterseite (12); und
einer auf der Oberseite der Trägerstruktur angeordneten Haltestruktur (4) zum Einschränken oder Behindern einer horizontalen Bewegung eines auf der Trägerstruktur gelagerten Transportgutes in Bezug auf die Trägerebene;
wobei die Haltestruktur Mittel (41, 42, 43, 44, 45a, 45b, 46) aufweist, welche mit auf der Trägerstruktur stehenden Lagerelementen (22, 31) des genannten Transportguts wechselwirken, und so eine reversible Fixierung des Transportguts entlang mindestens eines Vektors parallel zur Trägerebene bewirken, zu deren Überwindung eine parallel zur Trägerebene wirkende Kraft aufgewendet werden muss, die einen gewissen Schwellenwert überschreitet.

2. Transportträger nach Anspruch 1, wobei die Haltestruktur (4) Mittel aufweist, welche die Haftreibung gegenüber einer glatten Fläche erhöhen.

3. Transportträger nach Anspruch 1 oder 2, wobei die Oberseite (11) der Trägerstruktur mindestens so gross oder grösser ist als die Projektion eines auf der Trägerstruktur gelagerten Transportgutes (2, 3, 5) senkrecht auf die Trägerebene (14).

4. Transportträger nach einem der vorangegangenen Ansprüche, wobei die Haltestruktur (4) ein auf der Trägerstruktur gelagertes Transportgut (2, 3, 5) parallel zur Trägerebene (14) nicht formschlüssig fixiert beziehungsweise nicht formschlüssig fixieren kann.

5. Transportträger nach einem der vorangegangenen Ansprüche, wobei die Haltestruktur (4) eine Beschichtung mit einem Polymer mit hoher Haftreibung, eine Matte aus elastischem Polymer, eine Bürstenmatte, eine Matte mit Hohlräumen, einen Teppich, oder Kombinationen davon aufweist.

6. Transportträger nach einem der vorangegangenen Ansprüche, wobei die Haltestruktur (4) eine Matte mit geschlossenen fluidgefüllten Hohlräumen aufweist.

7. Transportträger nach einem der vorangegangenen Ansprüche, wobei die Haltestruktur (4) einen im Wesentlichen geschlossenen Behälter aufweist, der eine hochviskose Flüssigkeit enthält, und auf einer der Trägerstruktur abgewandten Seite mit einer flexiblen Wand abgeschlossen ist.

8. Transportträger nach einem der Ansprüche 6 bis 8, wobei auf der von dem Behälterinneren abgewandten Oberfläche der flexiblen Wand beziehungsweise der von der Oberfläche (11) angewandten Seite der Matte flexible und/oder starre Verstärkungselemente angebracht sind, welche die flexible Wand beziehungsweise die Matte vor mechanischen Einwirkungen schützen.

9. Transportträger nach Anspruch 1, wobei die Haltestruktur (4) Vertiefungen (45b, 46) in einer Lagerfläche (47) umfasst, und/oder eine Gitterstruktur umfasst.

10. Transportträger nach Anspruch 9, wobei die Haltestruktur eine Vielzahl von Vertiefungen (46) in einer ebenen Lagerfläche (47) umfasst, wobei die Vertiefungen so ausgestaltet sind, dass ein Segment eines Rades (31) eines fahrbaren Behälters darin angeordnet werden kann.

11. Transportträger nach einem der vorangegangenen Ansprüche, wobei die Trägerstruktur einen umlaufenden Rand (13) aufweist, welcher über die Oberseite (11) der Trägerstruktur vorsteht.

12. Transportträger nach einem der vorangegangenen Ansprüche, wobei die Oberfläche (11) der Trägerstruktur als eine konkave Vertiefung (15) ausgestaltet ist, in der das Transportgut (2, 3, 5) angeordnet werden kann.

13. Transportträger nach Anspruch 12, wobei die konkave Vertiefung (15) bündig in einen umlaufenden Rand (13) der Transportstruktur über.

14. Transportträger nach einem der vorangegangenen Ansprüche, wobei die Unterseite (12) der Trägerstruktur als ebene Fläche ausgebildet ist, und/oder als Gitterstruktur ausgebildet ist, die über die ganze Unterseite eine ebene Auflagefläche definiert.

15. Verfahren zur Beladung eines Transportträgers, umfassend die Schritte:
Bereitstellen eines Transportträgers (1) nach einem der Ansprüche 1 bis 14 in einer Beladeposition, in welcher der Transportträger gegenüber einer waagrechten Transportposition um einen gewissen Winkel gekippt ist;
Bereitstellen eines Transportgutes (3);
Aufbringen des bereitgestellten Transportgutes auf den bereitgestellten Transportträger in der Beladeposition;
Schwenken des Transportträgers in die waagrechte Transportposition.

16. Verfahren nach Anspruch 15, wobei der Transportträger (1) eine konkave Oberfläche ausweist, und/oder ein Transportträger nach einem der Ansprüche 12 oder 13 ist.

17. Verfahren nach Anspruch 15 oder 16, wobei das Transportgut (3) rollbar ist.
